Europäisches Patentamt

European Patent Office

Office européen des brevets

(11) Veröffentlichungsnummer: **0 069 800**
**A1**

(12) EUROPÄISCHE PATENTANMELDUNG

(21) Anmeldenummer: 81106210.8

(22) Anmeldetag: 08.08.81

(51) Int. Cl.³: **C 02 F 1/74**
**C 02 F 1/28, C 02 F 1/40**

(30) Priorität: 15.07.81 CH 4635/81

(43) Veröffentlichungstag der Anmeldung:
19.01.83 Patentblatt 83/3

(84) Benannte Vertragsstaaten:
AT BE CH DE FR GB IT LI LU NL SE

(71) Anmelder: GEBRÜDER SULZER
AKTIENGESELLSCHAFT
Zürcherstrasse 9
CH-8401 Winterthur(CH)

(72) Erfinder: Muriset, Roger
Büelstrasse 85
CH-8474 Dienhard(CH)

(72) Erfinder: Gnieser, Jürgen
Langgrütstrasse 184
CH-8047 Zürich(CH)

(72) Erfinder: Hofer, Helmut
Schriberweidstrasse 23
CH-8330 Pfäffikon(CH)

(74) Vertreter: Dipl.-Ing. H. Marsch Dipl.-Ing. K. Sparing
Dipl.-Phys.Dr. W.H. Röhl Patentanwälte
Rethelstrasse 123
D-4000 Düsseldorf(DE)

(54) Verfahren zur Reinigung von hydrazin-haltigen Abwässern.

㊳ Die durch Aktivkohle katalysierte Oxidation von Hydrazin (N₂H₄) durch Luft in Stickstoff und Wasser wird in einem Wirbelbett durchgeführt, in dem die körnige Aktivkohle (2) gehalten wird. Das Wirbelbett, das in einem mit dem zu reinigenden Wasser gefüllten Filterbecken (1) aufgebaut wird, wird durch den Strom der für die Reaktion benötigten Luft erzeugt, die im Bereich des Bodens (4) des Beckens (1) eingeblasen wird.

Durch die Führung der Luft von unten nach oben und die Ausbildung eines Wirbelbettes wird die bei einem Durchsatz der Luft von oben nach unten sehr rasch nachlassende Wirksamkeit der Oxidations-Reaktion erheblich gesteigert. Dieses Nachlassen ist auf Kanalbildungen in dem Katalysatormaterial durch grosse Mengen aufsteigenden Stickstoffes verursacht.

Fig. 2

EP 0 069 800 A1

Gebrüder Sulzer, Aktiengesellschaft, Winterthur/Schweiz

Verfahren zur Reinigung von hydrazin-haltigen Abwässern

Die Erfindung betrifft ein Verfahren zur Reinigung von hydrazin-($N_2H_4$)-haltigen Abwässern, insbesondere von Dampfkesselanlagen, wobei die Abwässer mit Luft begast und durch ein Aktivkohlefilter als Katalysator geführt werden.

Bekanntlich koorodieren Dampfkessel von Kraftwerken während Stillstandszeiten; um dies zu verhindern, werden sie mit Hydrazin-Lösungen bis zu einem Gehalt von 500 $gN_2H_4/m^3$ gefüllt. Beim Wiederanfahren der Kessel müssen diese Lösungen abgelassen werden. Da Hydrazin ein Fischgift ist, muss es vernichtet werden, bevor die Stillstandsfüllung in die Oberflächengewässer gelangt.

Diese Vernichtung erfolgt im allgemeinen durch Oxidation entweder mit Luft oder Chlor oder Wasserstoffsuperoxid. Der Nachteil der Oxidation mit Wasserstoffsuperoxid besteht darin, dass das Wasserstoffsuperoxid wegen Explosionsgefahr unter speziellen Vorsichtsmassnahmen gelagert werden muss. Der Nachteil der Oxidation mit Chlor besteht darin, dass ein grosser Aufwand mit empfindlichen Regel- und Dosiergeräten verlangt wird. Trotz dieses Aufwandes kann in der Praxis nicht vermieden werden, dass das gereinigte Abwasser zeitweise einen zu hohen Hydrazin- oder Chlorgehalt aufweist.

Diese umweltfreundliche Vernichtung erfolgt im allgemeinen durch Oxidation mit Luft, wobei Stickstoff und Wasser entstehen. Diese Oxidation verläuft an sich zwar langsam, kann aber durch Katalysatoren, z.B. Aktivkohle oder Kupferbindungen, stark beschleunigt werden. Bekannt ist daher eine Filtration der Hydrazin-Lösung von oben nach unten durch ein Aktivkohlefilter. Da bei der Luftoxidation von 10 g Hydrazin 7,6 l Stickstoff entstehen, bilden sich bei der Filtration im vorliegenden Fall bei der Behandlung von 500 g $N_2H_4/m^3$ 380 l Stickstoff pro $m^3$ Abwasser, wobei die Löslichkeit von Stickstoff in Wasser, die unter normalen Bedingungen etwa 26 l $N_2/m^3$ beträgt, stark überschritten wird.

Diese Ansammlung von Gasen macht die Filtration nach kurzer Zeit unwirksam oder verschlechtert sie zumindest erheblich; denn die aufsteigenden Gase erzeugen nach kurzer Zeit in dem Aktivkohlebett Kanäle, in denen die zu behandelnde Lösung die Aktivkohle relativ rasch durchsetzt. Damit werden ausreichende Kontakte zu den Oberflächen der Aktivkohlepartikel dem Sauerstoff und dem Hydrazin verhindert.

Aufgabe der Erfindung ist es daher, ein Verfahren zu schaffen, bei dem die geschilderten Nachteile nicht auftreten und durch die dafür benötigte Anlage nicht in kurzer Zeit inaktiviert wird, so dass die Wirksamkeit für die Reinigung der hydrazin-haltigen Abwässer rasch erheblich absinkt. Nach der vorliegenden Erfindung wird diese Aufgabe dadurch gelöst, dass mindestens der Luftstrom die Aktivkohle von unten nach oben durchsetzt, und dass ferner die Aktivkohle durch die aufwärts strömende Luft in einem Wirbelbett gehalten wird.

Durch das neue Verfahren wird die erwähnte Kanalbildung verhindert; darüberhinaus wird die Durchmischung der Reaktionspartner untereinander und mit den Partikeln des Aktivkohle-Katalysators erheblich verbessert, so dass die Wahrscheinlichkeit, für die Reaktionspartner an einer Kontaktoberfläche des Katalysators zusammenzutreffen, stark vergrössert wird.

Eine Anlage zur Durchführung des Verfahrens ist gekennzeichnet durch ein mindestens Aktivkohle-Granulat enthaltendes Filterbecken, über dessen Boden verteilt mit Austrittsöffnungen versehene Luftleitungen angeordnet sind, die an eine Druckluftquelle, beispielsweise ein Gebläse, angeschlossen sind. Dabei kann es vorteilhaft sein, wenn als körniges Filtermaterial im Filterbecken ein Gemisch mindestens von Aktivkohle und einem zweiten Material vorhanden ist, dessen Korn schwerer und grösser ist als dasjenige des Aktivkohle-Granulats.

Das zweite Material, das sich bei einer Unterbrechung des Luftstromes zuerst absetzt, verhindert mit seinem grösseren Korn, das grösser ist als die Luftaustrittsöffnungen der Luftleitungen, ein Eindringen der Aktivkohle in diese Leitungen.

Sehr häufig ist es zweckmässig, wenn das Abwasser nacheinander mehrere, in Serie angeordnete Aktivkohle-Wirbelbetten durchsetzt; denn falls das Abwasser weitere Verunreinigungen, beispielsweise Mineraloel, enthält, die die Katalysatoren-Oberflächen verschmutzen und daher die Wirksamkeit des Katalysators beeinträchtigen, wird auf diese Weise nur ein Teil der Katalysator-Masse, nämlich derjenige der ersten Stufe verunreinigt und unwirksam. Dafür können bei der zugehörigen Anlage mit Vorteil mehrere Filterbecken hintereinander angeordnet sein.

Bei wechselnden Hydrazin-Gehalten des anfallenden Abwassers ist es weiterhin, beispielsweise aus Gründen der Energie-Ersparnis, zweckmässig, wenn nur ein Teil der Aktivkohle-Wirbelbetten durchsetzt wird; dafür können bei einer entsprechenden Anlage die Luftleitungen der einzelnen Filterbecken an verschiedenen Druckluftquellen angeschlossen sein, die einzeln abschaltbar sind.

In diesem Zusammenhang ist es weiterhin vorteilhaft, wenn die Zu- und Abschaltung einzelner Filterbecken von einem Hydrazin-Messgerät am Eintritt in das erste Filterbecken gesteuert wird.

Eine Anlage zur Durchführung des neuen Verfahrens kann darüberhinaus vervollständigt werden durch einen vorgeschalteten Oelabscheider, um die geschilderten Katalysator-Verunreinigungen zu vermeiden und durch ein nachgeordnetes Absetzbecken oder ein Festbettfilter, um im Wirbelbett entstehenden Abrieb an Aktivkohle aus dem Reinwasser vor seiner Weiterleitung zu entfernen.

Weiterhin ist es zweckmässig, wenn der Rohwassereintritt in das und der Rohwasseraustritt aus dem Filterbecken mindestens annähernd auf der Niveauhöhe des Filterbeckens versetzt zueinander angeordnet sind.

Im folgenden wird die Erfindung anhand zweier Ausführungsbeispiele im Zusammenhang mit der Zeichnung näher erläutert.

Fig. 1 ist ein rein schematischer Grundriss eines einzelnen Filterbeckens zur Durchführung des neuen Verfahrens;

Fig. 2 zeigt einen Schnitt II-II von Fig. 1;

Fig. 3 gibt den Schnitt III-III von Fig. 1 wieder,

während

Fig. 4 schliesslich in gleicher Darstellung wie Fig. 2, ebenfalls rein schematisch, eine mehrstufige Anlage darstellt.

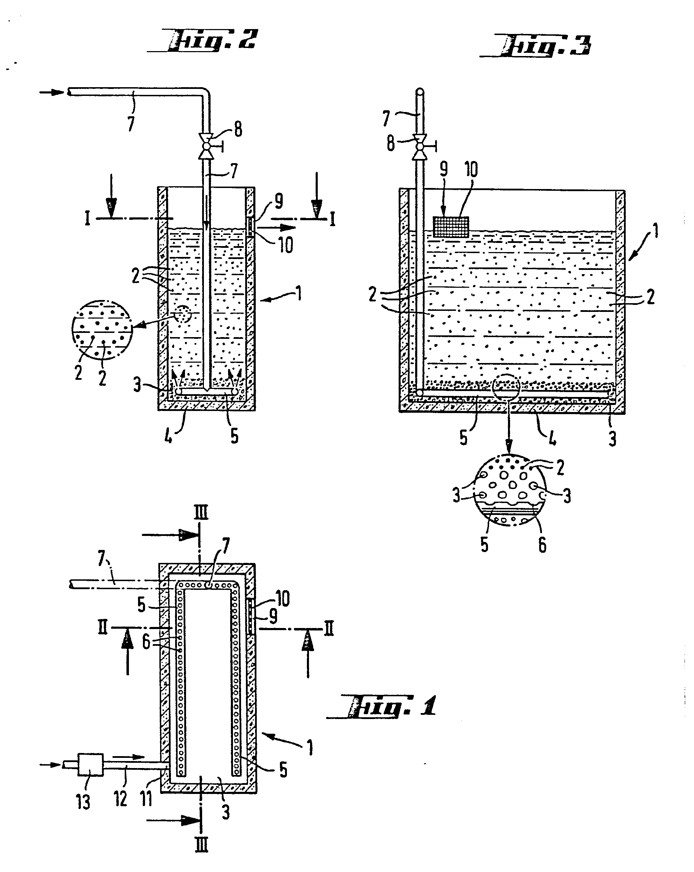

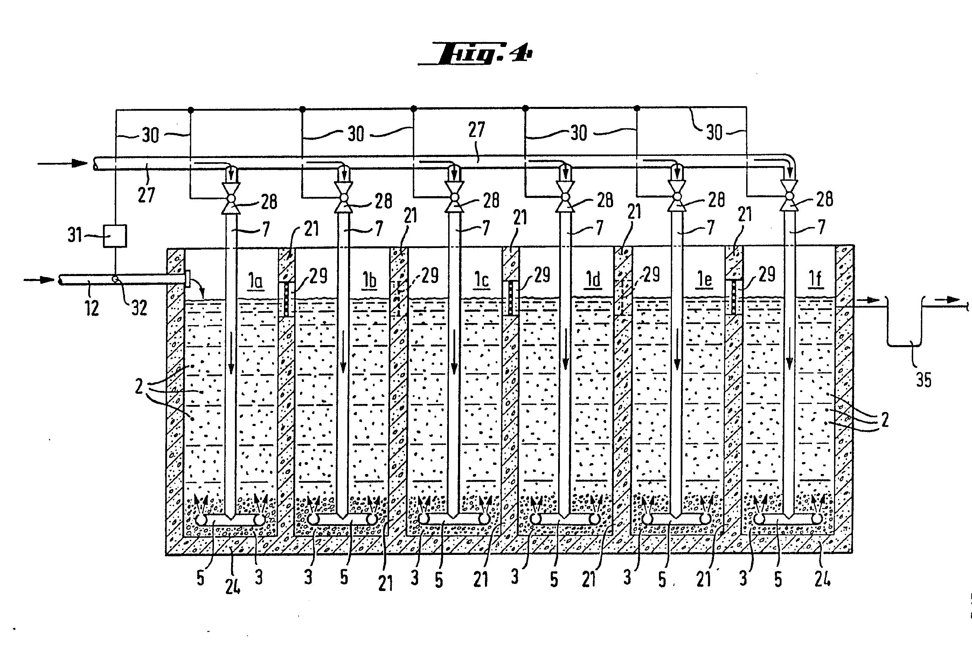

Als Reaktor für den katalytischen Hydrazin-Abbau dient ein Filterbecken 1 üblicher Bauart, beispielsweise aus Beton, in dem als Katalysator Aktivkohle 2 (Fig. 2) in Granulatform mit einer Körnung von 0,4 - 1,7 mm enthalten ist. Neben dieser Aktivkohle besteht die Füllung des Filterbeckens 1, die im Zustand bei der Durchführung des erfindungsgemässen Verfahrens, also als Wirbelbett dargestellt ist, aus einer zweiten körnigen Masse 3, beispielsweise Quarz-Sand, deren Korn - aus dem geschilderten Grund - gröber und deren spezifisches Gewicht grösser ist als dasjenige der Aktivkohle. Der Sand weist beispielsweise zwei Körnungen auf, eine mit einer Korngrösse von 3 - 5 mm und eine mit Körnern von 2 - 3 mm. Selbstverständlich ist es möglich, den Sand durch ein anderes Material, beispielsweise Bimsstein, zu ersetzen.

Nahe über dem und verteilt über dem Boden 4 des Beckens 1 sind Luftverteilleitungen 5 vorgesehen, die in den dargestellten Beispielen U-Form besitzen und auf ihrer Oberseite Austrittsöffnungen 6 haben. Gespeist werden die Luftleitungen 5 von einer Zufuhrleitung 7, in der ein Absperrorgan 8 vorgesehen ist.

Die Zufuhrleitung 7 ist an eine nicht dargestellten Luftquelle, beispielsweise ein Gebläse, oder über eine Druck-Reduziereinrichtung an eine Druckgasflasche angeschlossen.

Die Rohwasserzuführung zum Becken 1 erfolgt über eine schematisch angedeutete Leitung 12, die in einem Rohwassereintritt 11 endet; der Reinwasseraustritt wird durch eine Oeffnung 9 in einer Seitenwand des Filterbeckens 1 gebildet; diese Oeffnung 9 ist durch ein Sieb 10 verschlossen, welches den Austritt von Granulat aus dem Becken 1 verhindert. Um einen direkten Kurzschluss zwischen Rohwassereintritt 11 und Reinwasseraustritt 12 zu verhindern, sind beide zwar etwa auf der Niveauhöhe des Wirbelbettspiegels, jedoch versetzt zueinander angeordnet.

Um das Katalysator-Material vergiftende Verunreinigungen, insbesondere Mineraloele, vom Becken 1 möglichst fern zu halten, ist in der Leitung 12 vor dem Rohwassereintritt 11 ein Oelabscheider 13 vorgesehen, der in Fig. 2 schematisch angedeutet ist.

Das neue Verfahren läuft dabei etwa wie folgt ab:
Im Becken 1, das ein Gesamtvolumen von beispielsweise 3 $m^3$ hat, fliesst in kontinuierlichem Strom ein Rohwasser mit einem $N_2H_4$-Gehalt von 320 g/$m^3$ mit einer Geschwindigkeit von 1 $m^3$/h zu. Im Becken 1 sind die Luftverteilleitungen 5 in eine Sandschicht eingebettet, die zwei Körnungen von 2 - 3 und 3 - 5 mm aufweist und eine Höhe von 10 - 15 cm hat; auf dieser Sandschicht befindet sich eine Aktivkohleschicht mit einer Körnung von 0,4 - 1,7 mm in einer Menge von 48 kg.

Zur Erzeugung des Wirbelbettes wird während des Betriebs über die Leitungen 7 und 5 stündlich eine Luftmenge von 23 $m^3$ mit einem Druck von 20 000 Pa eingeblasen, der von einem nicht dargestellten Gebläse erzeugt wird; das Wirbelbett besteht - je nach Strömungsgeschwindigkeit der Luft - aus Aktivkohle allein oder einer Mischung aus Aktivkohle und Sand.

Nach einer durchschnittlichen Verweilzeit von etwa 2 Stunden fliesst das Wasser durch die mit dem Sieb 10 versehene Oeffnung 9 aus dem Becken 1 ab. Es hat dabei noch einen Hydrazin-Gehalt von etwa 90 g/m$^3$.

Sollen die Verweilzeiten nicht zu lange und/oder im Becken nicht zu gross sein, so lässt sich ein weitergehender Abbau des $H_2H_4$ erreichen, wenn - wie in Fig. 4 gezeigt - ein Einzelbecken 1 nach Fig. 1 - 3 eine Stufe einer mehrstufigen Anlage bildet. Mehrere Becken 1a - 1f sind dabei auf einem gemeinsamen Boden 24 angeordnet, wobei der Reinwasseraustritt 29 eines vorhergehenden Beckens gleichzeitig den Rohwassereintritt des nachfolgenden Beckens bildet und die Oeffnungen 29 direkt aufeinander folgender Trennwände 21 wiederum versetzt zueinander liegen. Die Verteilleitungen 5 der einzelnen Stufen sind mit ihren vertikalen Zufuhrleitungen 7 an eine gemeinsame Speiseleitung 27 parallel zueinander angeschlossen. In den einzelnen Leitungen 7 sind steuerbare Auf/Zu-Ventile 28 vorgesehen, die über Signalleitungen 30 von einem Regler 31 betätigt werden. Diesem wird ein Mess-Signal eines Fühlers 33 zugeführt, durch den der Ist-Wert des $H_2H_4$-Gehaltes in der Speiseleitung 12 des ersten Filterbeckens 1a gemessen wird. Bei der mehrstufigen Anlage führt der Reinwasseraustritt 29 des letzten Filterbeckens 1f in ein nur schematisch angedeutetes Absetzbecken 35 ehe das gereinigte Wasser in eine Kanalisation oder ein Oberflächengewässer abgelassen wird. Wie erwähnt, dient das Absetzbecken 35 der Trennung des Reinwassers von in den Wirbelbetten durch Reibung entstehendem Abrieb an Aktivkohle. Bei gegenüber dem ersten Beispiel gleichbleibenden stündlichen Durchsatzmengen für die Teilbecken 1a - 1f, von denen jedes das gleiche Volumen und die gleichen Materialmengen wie das Becken des ersten Ausführungsbeispiels aufweisen, ergeben sich bei dieser zweiten Anlage Gesamtverweilzeiten von 6 Stunden. Rohwasser mit einem Hydrazin-Gehalt von beispielsweise 400 $g/m^3$ wird in einer solchen Anlage unter den genannten Bedingungen vollständig von $N_2H_4$ befreit. wobei beispielsweise am Austritt 29 der einzelnen Becken 1a - 1f folgenden Konzentrationen an $H_2H_4$ auftreten:

Austritt 1a etwa 260 $g/m^3$
       1b "  165 "
       1c "   95 "
       1d "   50 "
       1e "   15 "
       1f "   --

Patentansprüche

1. Verfahren zur Reinigung von hydrazin-($N_2H_4$)-haltigen Abwässern, insbesondere von Dampfkesselanlagen, wobei die Abwässer mit Luft begast und durch ein Aktivkohlefilter als Katalysator geführt werden, dadurch gekennzeichnet, dass mindestens der Luftstrom die Aktivkohle von unten nach oben durchsetzt, und dass ferner die Aktivkohle durch die aufwärts strömende Luft in einem Wirbelbett gehalten wird.

2. Verfahren nach Anspruch 1, dadurch gekennzeichnet, dass das Abwasser nacheinander mehrere, in Serie angeordnete Aktivkohle-Wirbelbetten durchsetzt.

3. Verfahren nach Anspruch 2, dadurch gekennzeichnet, dass nur ein Teil der Aktivkohle-Wirbelbetten in Betrieb gesetzt wird.

4. Anlage zur Durchführung des Verfahens nach Anspruch 1, gekennzeichnet durch ein mindestens Aktivkohle-Granulat (2) enthaltendes Filterbecken (1; 1a - 1f), über dessen Boden (4, 24) verteilt mit Austrittsöffnungen (6) versehene Luftleitungen (5) angeordnet sind, die an eine Druckluftquelle, beispielsweise ein Gebläse, angeschlossen sind.

5. Anlage nach Anspruch 4, dadurch gekennzeichnet, dass als körniges Filtermaterial im Filterbecken ein Gemisch mindestens von Aktivkohle (2) und einem zweiten Material (3) vorhanden ist, dessen Korn schwerer und/oder grösser ist als dasjenige des Aktivkohle-Granulats (2).

6. Anlage nach Anspruch 4, dadurch gekennzeichnet, dass für eine stufenweise Reinigung der Abwässer mehrere Filterbecken (1a - 1e) hintereinander angeordnet sind.

7. Anlage nach Anspruch 6, dadurch gekennzeichnet, dass die Luftleitungen der einzelnen Filterbecken (1a - 1f) an verschiedene Druckluftquellen angeschlossen sind, die einzeln abschaltbar sind.

8. Anlage nach Anspruch 6, dadurch gekennzeichnet, dass die Zu- und Abschaltung einzelner Filterbecken (1a - 1f) von einem Hydrazin-Messgerät (32) am Eintritt in das erste Filterbecken (1a) gesteuert wird.

9. Anlage nach Anspruch 4, dadurch gekennzeichnet, dass der Rohwassereintritt (11) in das und der Rohwasseraustritt (9) aus dem Filterbecken (1) mindestens annähernd auf der Niveauhöhe des Filterbeckens (1) versetzt zueinander angeordnet sind.

10. Anlage nach Anspruch 4, dadurch gekennzeichnet, dass dem Filterbecken ein Absetzbecken oder ein Festbett-Filter nachgeordnet ist.

11. Anlage nach Anspruch 4, dadurch gekennzeichnet, dass dem Filterbecken (1) ein Oelabscheider (13) vorgeschaltet ist.

IPL.-ING. H. MARSCH ....-...
DIPL.-ING. K. SPARING
DIPL.-PHYS. DR. W. H. RÖHL
PATENTANWÄLTE
ZUGEL. VERTRETER BEIM EUROPÄISCHEN PATENTAMT

Europäisches Patentamt
Erhardtstraße 27

8 München-2

Betr.   81106210.8

Gebrüder Sulzer AG -/4555-E

-----------------------------------------------

Als Anlage werden die vorschriftsmäßigen Zeichnungen überreicht.

Zugleich wird sehr höflich gebeten, im Anmeldungstext amtsseitig die folgenden Schreibfehler zu korrigieren:

Seite 1:   Zeile 6, zweites Wort muß lauten: "korrodieren"

Seite 2:   Zeile 3, letztes Wort muß lauten: "Kupferver-

Seite 6:   Zeile 12, "Fig. 2" muß lauten: "Fig. 1 "

Seite 7:   Zeile 7 und Zeile 21 "$H_2H_4$" muß lauten: "$N_2H_4$" ,

Zeile 20, das Bezugszeichen "33" muß lauten: "32",

Seite 8:   Zeile 7, $H_2H_4$" muß lauten: "$N_2H_4$.

Weiterhin wird eine neue Seite 10 mit den Ansprüchen 7 bis 11 überreicht, auf der noch Ergänzungen vorgenommen worden sind.

Anlage.                          Der Patentanwalt:

( S... )

7. Anlage nach Anspruch 6, dadurch gekennzeichnet, dass die Luftleitungen der einzelnen Filterbecken (1a - 1f) an verschiedene Druckluftquellen angeschlossen sind, die einzeln abschaltbar sind.

8. Anlage nach Anspruch 6, dadurch gekennzeichnet, dass die Zu- und Abschaltung einzelner Filterbecken (1a - 1f) von einem Hydrazin-Messgerät (32) am Eintritt in das erste Filterbecken (1a) gesteuert wird.

9. Anlage nach Anspruch 4, dadurch gekennzeichnet, dass der Rohwassereintritt (11) in das und der Rohwasseraustritt (9) aus dem Filterbecken (1) mindestens annähernd auf der Niveauhöhe des Filterbeckens (1) versetzt zueinander angeordnet sind.

10. Anlage nach Anspruch 4, dadurch gekennzeichnet, dass dem Filterbecken ein Absetzbecken oder ein Festbett-Filter nachgeordnet ist.

11. Anlage nach Anspruch 4, dadurch gekennzeichnet, dass dem Filterbecken (1) ein Oelabscheider (13) vorgeschaltet ist.

Fig. 2

Fig. 3

Fig. 1

Fig. 4

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 1 517 634 (KRUPP) <br><br> + Seite 2, Zeilen 5-21; Seite 3, Zeilen 6-18; Seite 4, Zeile 16 - Seite 6, Zeile 11 + <br><br> -- | 1,4 |
| | DE - A - 2 353 562 (REGIS) <br><br> + Anspruch 1; Seite 3, Zeilen 12-15; Seite 4, Zeile 33 - Seite 5, Zeile 15; Seite 28, Zeile 31 - Seite 30, Zeile 7 + <br><br> ---- | 1 |

**KLASSIFIKATION DER ANMELDUNG (Int. Cl.)**

C 02 F 1/74
C 02 F 1/28
C 02 F 1/40

**RECHERCHIERTE SACHGEBIETE (Int. Cl.)**

C 02 F

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 13-10-1981 | WILFLINGER |

EPA form 1503.1 06.78